(19) Europäisches Patentamt
European Patent Office
Office européen des brevets

(11) **EP 4 542 363 A1**

(12) **EUROPEAN PATENT APPLICATION**
published in accordance with Art. 153(4) EPC

(43) Date of publication:
**23.04.2025 Bulletin 2025/17**

(51) International Patent Classification (IPC):
**G06F 3/04883** *(2022.01)* **G06F 3/04847** *(2022.01)*

(21) Application number: **23838760.9**

(22) Date of filing: **30.06.2023**

(86) International application number:
**PCT/CN2023/104823**

(87) International publication number:
**WO 2024/012268 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.07.2022 CN 202210834498**

(71) Applicant: Vivo Mobile Communication Co., Ltd.
**Dongguan, Guangdong 523863 (CN)**

(72) Inventors:
- **LI, Wei**
  **Dongguan, Guangdong 523863 (CN)**
- **LI, Guorong**
  **Dongguan, Guangdong 523863 (CN)**
- **GAO, Lixin**
  **Dongguan, Guangdong 523863 (CN)**

(74) Representative: **Murgitroyd & Company**
**165-169 Scotland Street**
**Glasgow G5 8PL (GB)**

(54) **VIRTUAL OPERATION METHOD AND APPARATUS, ELECTRONIC DEVICE, AND READABLE STORAGE MEDIUM**

(57) This application discloses a virtual operating method and apparatus, an electronic device, and a readable storage medium, pertaining to the field of mixed reality technologies. The method includes: displaying a virtual touch interface, where the virtual touch interface is associated with a position of a target plane in a physical space in which an electronic device is located; recognizing hand gesture information of a user; and performing a target operation in a case that position information, of a first region of the virtual touch interface, in the physical space and the hand gesture information meet a preset condition.

An electronic device displays a virtual touch interface — 101

The electronic device recognizes hand gesture information of a user — 102

The electronic device performs a target operation in a case that position information, of a first region of the virtual touch interface, in the physical space and the hand gesture information meet a preset condition — 103

FIG. 1

EP 4 542 363 A1

## Description

## CROSS-REFERENCE TO RELATED APPLICATION

This application claims priority to Chinese Patent Application No. 202210834498.6, filed in China on July 14, 2022, which is incorporated herein by reference in its entirety.

## TECHNICAL FIELD

This application pertains to the field of mixed reality technologies, and specifically relates to an operation execution method and apparatus, an electronic device, and a readable storage medium.

## BACKGROUND

Generally, in a scenario where a user uses an extended reality (extended reality, XR) device, the user can interact with the XR device through a peripheral apparatus. Specifically, if the user needs to trigger the XR device to perform an operation, the user can first trigger the XR device to establish a connection to the peripheral apparatus, and then perform a mobile input to the peripheral apparatus, so that the XR device may obtain relative position information of the peripheral apparatus with respect to the XR device and perform a specific operation based on the relative position information.

However, when the user interacts with the XR device through the peripheral apparatus, the user needs to trigger the XR device to establish a connection to the peripheral apparatus first, and then perform a mobile input to the peripheral apparatus to trigger the XR device to perform an operation, which therefore takes a relatively long time to trigger the XR device to perform an operation.

As a result, using the XR device features relatively poor convenience.

## SUMMARY

Embodiments of this application aim to provide a virtual operating method and apparatus, an electronic device, and a readable storage medium, which can resolve the problem of poor accuracy in performing user-required operations by an XR device.

According to a first aspect, an embodiment of this application provides a virtual operating method, where the method includes: displaying a virtual touch interface, where the virtual touch interface is associated with a position of a target plane in a physical space in which an electronic device is located; recognizing hand gesture information of a user; and performing a target operation in a case that position information, of a first region of the virtual touch interface, in the physical space and the hand gesture information meet a preset condition.

According to a second aspect, an embodiment of this application provides a virtual operating apparatus, and the virtual operating apparatus includes a display module, a recognizing module, and an execution module; where the display module is configured to display a virtual touch interface, where the virtual touch interface is associated with a position of a target plane in a physical space in which an electronic device is located; the recognizing module is configured to recognize hand gesture information of a user; and the execution module is configured to perform a target operation in a case that the hand gesture information recognized by the recognizing module and position information of a first region of the virtual touch interface disposed by the display module in the physical space meet a preset condition.

According to a third aspect, an embodiment of this application provides an electronic device, where the electronic device includes a processor and a memory, where the memory stores a program or instructions executable on the processor, and when the program or instructions are executed by the processor, the steps of the method according to the first aspect are implemented.

According to a fourth aspect, an embodiment of this application provides a readable storage medium, where a program or instructions are stored in the readable storage medium, and when the program or the instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instructions to implement the steps of the method according to the first aspect.

According to a sixth aspect, an embodiment of this application provides a computer program product, where the program product is stored in a storage medium, and the program product is executed by at least one processor to implement the steps of the method according to the first aspect.

In the embodiments of this application, the electronic device can display the virtual touch interface associated with the position of the target plane in the physical space in which the electronic device is located, and recognize the hand gesture information of the user, so as to perform the target operation in a case that the position information, of the first region of the virtual touch interface, in the physical space and the hand gesture information meet the preset condition. Because the electronic device can display the virtual touch interface associated with the position of the target plane in the physical space in which the electronic device is located, and recognize the hand gesture information of the user, the user can directly perform a distance hand gesture whose hand gesture information as well as the position information, of the first region of the virtual touch interface, in the physical space meet the preset condition, so that the electronic device can perform the target operation, with no need to trigger the XR device to connect a peripheral apparatus first, and then perform a mobile input on the peripheral apparatus. In this way, the time consumed in the process of triggering the electronic device to perform the target operation can be reduced, thereby improving use convenience of the electronic device.

## BRIEF DESCRIPTION OF DRAWINGS

FIG. 1 is a first schematic flowchart of a virtual operating method according to an embodiment of this application;

FIG. 2 is a second schematic flowchart of a virtual operating method according to an embodiment of this application;

FIG. 3 is a schematic diagram for detecting joint points of a user hand according to an embodiment of this application;

FIG. 4 is a third schematic flowchart of a virtual operating method according to an embodiment of this application;

FIG. 5 is a fourth schematic flowchart of a virtual operating method according to an embodiment of this application;

FIG. 6 is a schematic diagram of a target coordinate range according to an embodiment of this application;

FIG. 7 is a fifth schematic flowchart of a virtual operating method according to an embodiment of this application;

FIG. 8 is a schematic diagram of a virtual touch interface according to an embodiment of this application;

FIG. 9 is a sixth schematic flowchart of a virtual operating method according to an embodiment of this application;

FIG. 10 is a seventh schematic flowchart of a virtual operating method according to an embodiment of this application;

FIG. 11 is a schematic structural diagram of a virtual operating apparatus according to an embodiment of this application;

FIG. 12 is a schematic structural diagram of an electronic device according to an embodiment of this application; and

FIG. 13 is a schematic diagram of a hardware structure of an electronic device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

The following specifically describes in detail a virtual operating method and apparatus, an electronic device, and a readable storage medium provided in the embodiments of this application through some embodiments and application scenarios thereof with reference to the accompanying drawings.

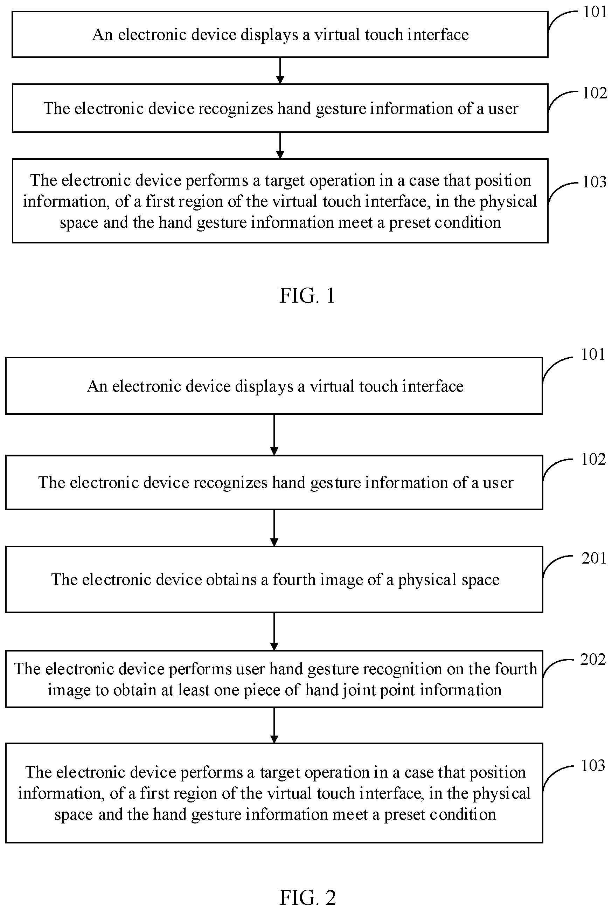

FIG. 1 is a first schematic flowchart of a virtual operating method according to an embodiment of this application. As shown in FIG. 1, a virtual operating method according to an embodiment of this application may include the following steps 101 to 103.

Step 101: An electronic device displays a virtual touch interface.

In this embodiment of this application, the virtual touch interface is associated with a position of a target plane in a physical space in which the electronic device is located.

Optionally, in this embodiment of this application, the electronic device may be an extended reality (extended reality, XR) device. The XR device may be any one of the following: a perspective display XR device and a non-perspective display XR device.

It should be noted that the "perspective display XR device" can be understood as an XR device with a perspective display screen, that is, the perspective display XR device can display a virtual object on the perspective display screen, so that a user can observe the virtual object on the perspective display screen while observing a surrounding physical space environment of the user through the perspective display screen.

The "non-perspective display XR device" can be understood as an XR device with a non-perspective display screen, that is, the non-perspective display XR device can display a surrounding physical space environment of the user and a virtual object on the non-perspective display screen, so that the user can observe the surrounding physical space environment of the user and the virtual object on the non-perspective display screen.

Optionally, in this embodiment of this application, the electronic device has one or more camera modules inclined downward at a target angle, where the target angle can be determined based on a position of the camera module on the electronic device, or determined based on a specific use requirement of the user for the electronic device.

Further optionally, in this embodiment of this application, the camera module can provide one or more types of image data (color or monochrome) and depth data, and an overlap rate of fields of view (field of view, FOV) of two shooting modules of each camera module is greater than a specific overlap rate threshold, where the specific overlap rate threshold may be 90%, so that the two shooting modules can form a FOV greater than a specific FOV threshold, where the specific FOV threshold may be 120°.

In an example, the camera module may include one image sensor and one depth sensor (for example, a time of flight (Time of flight, TOF) camera with structured light or using TOF).

In another example, the camera module may be formed by two image sensors disposed separately.

It should be noted that when a system is started, sensor data of the camera module is generated and transmitted to the system in real time at a specific frequency, and the system performs corresponding computing on each frame of data. The specific calculation process is detailed below.

Optionally, in this embodiment of this application, when the electronic device is in a working state, the electronic device can display a virtual touch interface on a target plane of the physical space in which the electronic device is currently located according to a click input to a physical key of the electronic device by the user.

It should be noted that the "current physical space" can be understood as a surrounding space environment where the user uses the electronic device. "The virtual touch interface being associated with the position of a target plane in a physical space in which the electronic device is located" can be understood as that for the virtual touch interface displayed by the electronic device, a corresponding realistic target plane in the surrounding space environment where the electronic device is located can be found.

Optionally, in this embodiment of this application, the target plane may be any one of the following: a plane on a target object in the current environment where the electronic device is located, and a plane perpendicular to the line-of-sight direction of the electronic device.

The target object may be: scenery, a body part (such as a palm part of the user) of the user, and so on.

Optionally, in this embodiment of this application, the electronic device may perform plane detection by using depth information obtained by the depth sensor or the image sensor in the camera module to determine the target plane.

Further optionally, in this embodiment of this application, the electronic device performs pre-processing on the obtained depth information and converts it into coordinate information required in subsequent steps.

Further optionally, in this embodiment of this application, the electronic device detects, based on the coordinate information, a target plane that can be used as a virtual touch interface in the space environment.

Further optionally, in this embodiment of this application, the electronic device can display a virtual touch panel on the target plane, and the virtual touch panel includes a virtual touch interface.

Step 102: The electronic device recognizes hand gesture information of a user.

Optionally, in this embodiment of this application, the electronic device may start a camera of the electronic device to capture at least one frame of image, and perform image recognition on the at least one frame of image to recognize the hand gesture information of the user relative to the electronic device.

Optionally, in this embodiment of this application, the electronic device can recognize the hand gesture information of the user relative to the electronic device by using the target information. The target information may be at least one of the following: depth information and image information.

Step 103: The electronic device performs a target operation in a case that position information, of a first region of the virtual touch interface, in the physical space and the hand gesture information meet a preset condition.

In this embodiment of this application, the target operation is an operation corresponding to the hand gesture information that meets the preset condition.

Optionally, in this embodiment of this application, in a case that the hand gesture information of the user relative to the electronic device is recognized, the electronic device may determine a spatial position relationship between the hand gesture information and the virtual touch interface to determine whether the hand gesture information is target hand gesture information.

Further optionally, in this embodiment of this application, in a case that a spatial distance between the hand gesture information of the user relative to the electronic device and the virtual touch interface is less than or equal to a preset spatial distance (for example, a first preset spatial distance in the following embodiment), the electronic device determines that the target hand gesture information is recognized.

Further optionally, in this embodiment of this application, the target hand gesture information is hand gesture information for which the target operation needs to be performed.

Optionally, in this embodiment of this application, the target hand gesture information may be at least one of the following: hand gesture trajectory and hand gesture type.

The hand gesture type may include any one of the following: single-finger hand gesture type, double-finger hand gesture type, and multi-finger hand gesture type. Here, the single-finger hand gesture type may include at least one of the following: single-finger tap type, single-finger double-tap type, single-finger triple-tap type, single-finger slide type, single-finger tap-and-hold type, and so on. The two-finger hand gesture type may include at least one of the following: two-finger tap type, two-finger slide up type, two-finger slide down type, two-finger slide left type, two-finger slide right type, two-finger tap-and-hold type, two-finger zoom-out type, and two-finger zoom-in type. The multi-finger hand gesture type may include at least one of the following: multi-finger slide left type, multi-finger slide right type, multi-finger slide up type, and multi-finger slide down type.

It should be noted that the "two-finger zoom-out type" may be specifically a hand gesture type in which the user's two fingers move towards each other to reduce a distance between the two fingers. The foregoing "two-finger zoom-in type" may be specifically a hand gesture type in which the user's two fingers move away from each other so as to increase the distance between the two fingers.

Optionally, in this embodiment of this application, the electronic device may first determine target hand gesture information, and then determine, based on the target hand gesture information, an operation (that is, the target operation) corresponding to the target hand gesture information from a plurality of correspondences, so that the electronic device can perform the target operation.

Each of the plurality of correspondences is a correspondence between one piece of target hand gesture information and one operation.

How the electronic device determines the target hand gesture information is described in detail below.

Optionally, in this embodiment of this application, with reference to FIG. 1, as shown in FIG. 2, before the above step 103, the virtual operating method provided in this embodiment of this application may further include the following steps 201 and 202.

Step 201: The electronic device obtains a fourth image of the physical space.

In this embodiment of this application, the fourth image includes an image of a user hand.

It should be noted that the "obtaining the fourth image of the physical space" can be understood as: the electronic device continuously captures at least one frame of image of the physical space in which the electronic device is located.

Optionally, in this embodiment of this application, at least one frame of fourth image includes depth image data information and image data information of the physical space in which the electronic device is located.

It can be understood that multiple frames of fourth images are used to convert the physical space around the electronic device and the image information of the user hand into point cloud information in the first coordinate system.

Optionally, in this embodiment of this application, the first coordinate system is a coordinate system of a space corresponding to a current environment of the electronic device.

Further optionally, in this embodiment of this application, the coordinate system of the space corresponding to the environment may be specifically a world coordinate system.

It should be noted that for converting image information of at least one frame of fourth image into point cloud information in the world coordinate system by the electronic device, reference may be made to the conversion method in the following embodiments and details are not described here.

Step 202: The electronic device performs user hand gesture recognition on the fourth image to obtain at least one piece of hand joint point information.

It should be noted that the electronic device may perform detection on joint points of the user hand based on at least one frame of fourth image. Regarding the detection on the hand joint points, refer to a typical algorithm based on deep learning. The hand image data and hand depth image data included in the fourth image are input into a neural network, and coordinates of several hand joint points in the second coordinate system are predicted and converted into coordinates in the first coordinate system.

Optionally, in this embodiment of this application, the first coordinate system may be a world coordinate system; and the second coordinate system may specifically be a camera coordinate system.

Optionally, in this embodiment of this application, the electronic device may select M target joint points from the joint points of the hand.

Further optionally, in this embodiment of this application, the M target joint points may be fingertips of a user hand.

Further optionally, in this embodiment of this application, the electronic device may obtain M pieces of first coordinate information of the M target joint points in the second coordinate system.

The M pieces of first coordinate information and the M target joint points are in one-to-one correspondence.

Further optionally, in this embodiment of this application, the electronic device can convert the M pieces of first coordinate information into M pieces of second coordinate information in the first coordinate system.

The M pieces of second coordinate information and the M pieces of first coordinate information are in one-to-one correspondence.

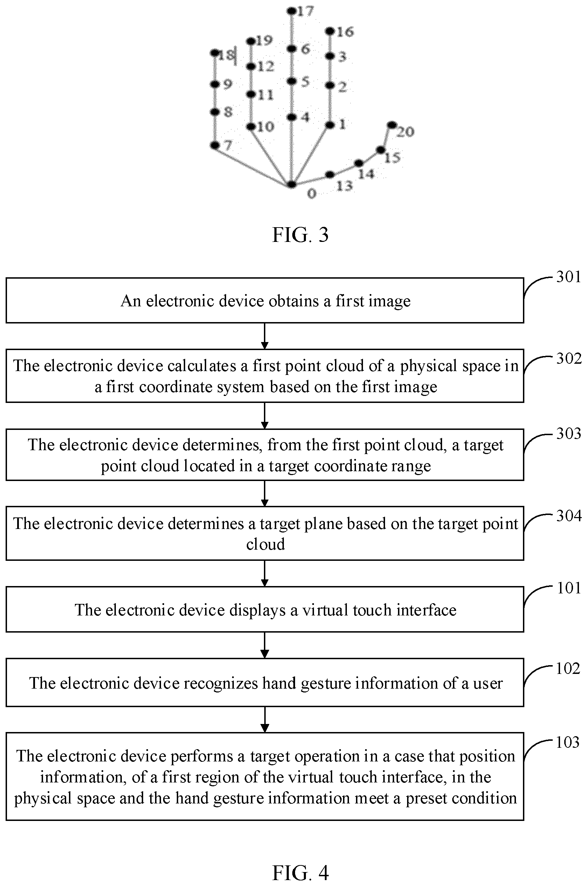

For example, as shown in FIG. 3, each hand contains 21 joint points, and each joint point has an index, such as numbers 0, 1, 2, 3, 4, ..., and 20 in FIG. 3. Based on the algorithm of deep learning, the electronic device inputs the hand image data and hand depth image data into the neural network, so as to predict the coordinates of the hand joint points in the camera coordinate system, and further, can convert the coordinates of the hand joint points in the camera coordinate system into coordinates in the world coordinate system. For the specific conversion process, refer to related descriptions in the following embodiments, which will not be repeated here. The electronic device may determine fingertip coordinates based on the user hand joint point coordinates, such as coordinates of five hand joint points numbered 16, 17, 18, 19, and 20 in the camera coordinate system, and convert the coordinates from the camera coordinate system to the world coordinate system. The specific implementation is the same as the above.

Optionally, in this embodiment of this application, the electronic device determines M target spatial distances respectively based on the M pieces of second coordinate information and target interface position information.

Further, optionally, in this embodiment of this application, the target interface position information is position information of the virtual touch interface in the first coordinate system.

The M target spatial distances and the M pieces of second coordinate information are in one-to-one correspondence.

Further, optionally, in this embodiment of this application, the M target spatial distances may be specifically spatial distances between the fingertip points of the user hand and the virtual touch interface in the first coordinate system.

Optionally, in this embodiment of this application, in a case that a target spatial distance less than or equal to a first preset spatial distance is included in the M target spatial distances, the electronic device determines that the target hand gesture information is recognized.

Optionally, in this embodiment of this application, the first preset spatial distance may be a spatial distance threshold preset by the electronic device.

Optionally, in this embodiment of this application, in the first coordinate system, the electronic device calculates the spatial distance between the fingertip coordinates and the virtual touch interface, and when the spatial distance between the fingertip coordinates and the virtual touch interface is within a set spatial threshold, the target hand gesture information is generated.

Further optionally, in this embodiment of this application, one or more piece of target hand gesture information can be determined based on the M target spatial distances, and each piece of target hand gesture information can be expressed by relative coordinates of the target hand gesture information in the virtual touch interface.

It can be understood that touch behaviors of M pieces of target hand gesture information in the virtual touch interface include a touch time, a touch frequency, and a touch displacement. A touch behavior on a touch point with a shorter touch time may be determined as tap; that with a longer touch time and without touch displacement may be determined as tap-and-hold; and that with a longer touch time and with touch displacement can be determined slide. The touch frequency can be used to determine the number of taps. That with a longer touch time and whose distance between two touch points changes may be determined as zoom-out or zoom-in.

For example, when one touch is performed for a short time within one second on one of the M touch points in the virtual touch interface, it can be determined as a single-finger tap in the hand gesture parameters; when one touch is performed for a short time within one second on two of the M touch points in the virtual touch interface, it may be determined as two-finger tap in the hand gesture parameters; when one touch is performed for a relatively long time without position displacement on one of the M touch points in the virtual touch interface, it may be determined as single-finger tap-and-hold in the hand gesture parameters; when one touch is performed for a relatively long time with position displacement on one of the M touch points in the virtual touch interface, it may be determined as single-finger slide in the hand gesture parameters, and a slide direction can be determined based on a displacement direction; and when one touch is performed for a relatively long time with position displacement on two of the M touch points in the virtual touch interface, and a distance between the two touch points becomes larger, it may be determined as two-finger zoom-in in the hand gesture parameters. Other parameters in the hand gesture parameters of the first distance hand gesture can be determined by referring to the examples.

It can be learned that the electronic device may obtain a touch behavior of the user fingers on the virtual touch interface, and then map a corresponding interaction control to interaction logic of the physical touch panel, so that the user can obtain an interaction experience similar to that of a notebook touch panel when using the electronic device, thereby improving accuracy of the electronic device in performing an operation required by the user.

According to the virtual operating method provided in this embodiment of this application, the electronic device can display the virtual touch interface associated with the position of the target plane in the physical space in which the electronic device is located, and recognize the hand gesture information of the user, so as to perform the target operation in a case that the position information, of the first region of the virtual touch interface, in the physical space and the hand gesture information meet the preset condition. Because the electronic device can display the virtual touch interface associated with the position of the target plane in the physical space in which the electronic device is located, the user can directly perform a distance hand gesture relative to the electronic device on the virtual touch interface without volleying the distance hand gesture relative to the electronic device, so as to avoid that the distance hand gesture relative to the electronic device made by the user is inaccurate due to muscle fatigue of the user hand. The electronic device can accurately recognize the hand gesture information of the user and accurately perform the target operation corresponding to the hand gesture information, thereby improving accuracy of the electronic device in performing an operation required by the user.

Specifically, before the electronic device obtains the target plane of the current environment and displays the virtual touch interface on the target plane, the electronic device needs to perform pre-processing on the image data of the current environment captured by the sensor to determine the target plane. The following describes how the electronic device performs pre-processing on the image data captured by the sensor.

Optionally, in this embodiment of this application, with reference to FIG. 1, as shown in FIG. 4, before the above step 101, the virtual operating method provided in this embodiment of this application may further include the following steps 301 to 304.

Step 301: The electronic device obtains a first image.

In this embodiment of this application, the first image is an image of the physical space in which the electronic device is located.

Optionally, in this embodiment of this application, the image of the physical space in which the electronic device is located includes a color or monochrome image and a depth image.

Optionally, in this embodiment of this application, the image of the physical space in which the electronic device is located may be provided by an image sensor or a depth sensor.

Further optionally, in this embodiment of this application, the depth sensor may be specifically a structured light or TOF sensor.

It should be noted that the image data corresponding to the color or monochrome image obtained by the electronic device merely needs to be processed through conventional ISP.

Step 302: The electronic device calculates a first point cloud of the physical space in a first coordinate system based on the first image.

Optionally, in this embodiment of this application, the first point cloud may be point cloud data of the physical space obtained by the electronic device in the first coordinate system based on the first image.

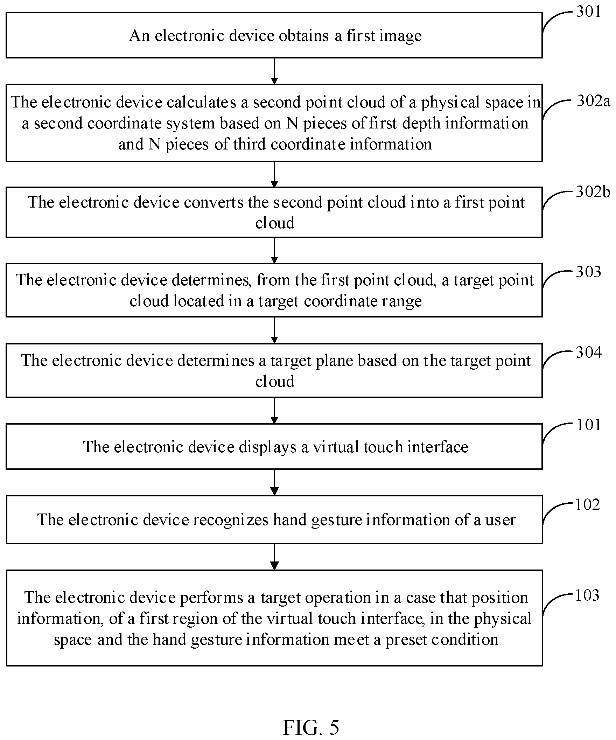

Optionally, in this embodiment of this application, the first image is a depth image, and the depth image includes N pieces of first depth information corresponding to N first pixels and N pieces of third coordinate information corresponding to the N first pixels. Specifically, with reference to FIG. 4, as shown in FIG. 5, the above step 302 can be specifically implemented through the following steps 302a and 302b.

Step 302a: The electronic device calculates a second point cloud of the physical space in a second coordinate system based on the N pieces of first depth information and the N pieces of third coordinate information.

In this embodiment of this application, each of the N first pixels corresponds to one piece of first depth information and one piece of third coordinate information, respectively.

Optionally, in this embodiment of this application, the N pieces of first depth information of the N first pixels may be obtained by a depth sensor or by a dual camera in a stereo matching manner.

It should be noted that the electronic device can choose to perform filtering optimization processing for the N pieces of first depth information, so as to achieve the optimization effect of reducing noise and keeping clear boundaries.

For the description of filtering optimization processing, refer to the existing technical solution of filtering optimization processing, which is not repeated here in this embodiment of this application.

Optionally, in this embodiment of this application, the N pieces of third coordinate information are N pieces of pixel coordinate information of the depth image.

In this embodiment of this application, the second point cloud may specifically be point cloud information of N pieces of pixel coordinate information of the depth image in the second coordinate system.

Further optionally, in this embodiment of this application, the electronic device may convert the pixel coordinate information of the depth image into the point cloud information in the second coordinate system.

The electronic device may obtain coordinates (m,n) of each pixel in the depth image, and for a valid depth value depth_mn, use formulas for conversion from the pixel coordinate system to the second coordinate system:

$$Z = depth\_mn/camera\_factor;$$

$$X = (n - camera\_cx)*Z/camera\_fx;$$

and

$$Y = (m - camera\_cy)*Z/camera\_fy;$$

In the formulas, camera_factor, camera_fx, camera_fy, camera_cx, and camera_cy are camera internal references.

Further optionally, in this embodiment of this application, the electronic device calculates the point cloud information (X,Y,Z) corresponding to the pixel point (m,n) of the depth image in the second coordinate system.

Optionally, in this embodiment of this application, the electronic device performs conversion processing on each pixel point in the depth image to obtain the point cloud information of the first image in the second coordinate system at a current moment.

Step 302b: The electronic device converts the second point cloud into the first point cloud.

It should be noted that "converting the second point cloud into the first point cloud" can be understood as: the electronic device converts the point cloud information of N pieces of third coordinate information in the second coordinate system into the point cloud information of N pieces of third coordinate information in the first coordinate system.

In this embodiment of this application, the point cloud information of the N pieces of third coordinate information in the second coordinate system can be converted into point cloud information of N pieces of third coordinate information in the first coordinate system through a related coordinate system conversion calculation formula.

For example, assume that the first coordinate system is W, the second coordinate system is C, and the calculation method of conversion from the second coordinate system to the first coordinate system is Twc. Taking coordinates of a point cloud point in the second point cloud as Pc (X, Y,Z), the following calculation formula is used to obtain coordinates Pw of the point cloud point converted into the first coordinate system:

$$Pw = Twc*Pc$$

For the conversion calculation method Twc, refer to the existing conversion calculation method, which is not repeated here in this embodiment of this application.

Optionally, in this embodiment of this application, the electronic device performs coordinate system conversion calculation on each point cloud point in the second point cloud to obtain point cloud information of the second point cloud in the first coordinate system.

It can be seen that the electronic device can calculate the second point cloud of the physical space in the second coordinate system based on the N pieces of first depth information and the N pieces of third coordinate information, and convert the second point cloud into the first point cloud through the coordinate system conversion calculation formula, so that the electronic device can perform corresponding pre-processing on the image data information of the current physical space collected by the sensor and convert it into the image data information of the data format required in subsequent steps.

In this embodiment of this application, when a depth sensor is not included in the sensor of the electronic device, the first image can also be obtained only by the image sensor.

Optionally, in this embodiment of this application, the electronic device can calculate the first point cloud based on at least one frame of second image.

Further optionally, in this embodiment of this application, the second image is an image of the physical space in which the electronic device is located.

Further optionally, in this embodiment of this application, the image of the physical space in which the electronic device is located may be a depth image including a sparse point cloud.

Further optionally, in this embodiment of this application, the sparse point cloud may be generated by using the second image through a simultaneous localization and mapping (simultaneous localization and mapping, SLAM) algorithm.

Step 303: The electronic device determines, from the first point cloud, a target point cloud located in a target coordinate range.

In this embodiment of this application, the target coordinate range is determined based on coordinate information of the electronic device in the first coordinate system.

Optionally, in this embodiment of this application, the target coordinate range may be a point cloud coordinate range surrounded by one cube coordinate set.

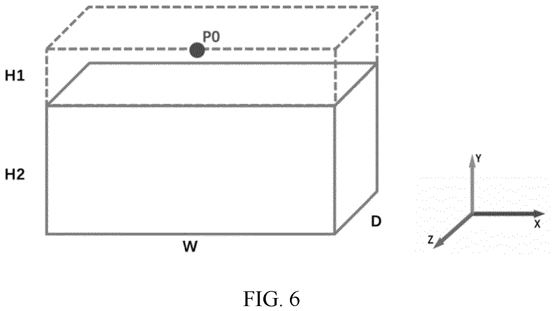

Further optionally, in this embodiment of this application, as shown in FIG. 6, the length W, the width D, and the height H2 of the cube can be determined based on a condition for using a virtual touch panel by the user.

For example, assuming that the condition for using the virtual touch panel by the user is: the length W of the touch panel is required to be at least 100 centimeters (cm), the width D is required to be at least 30 centimeters, and the field of view is required to be within 30 cm to 100 cm, the length W, the width D, and the height H2 of the cube can be determined to be 100 cm, 30 cm, and 70 cm, respectively.

Optionally, in this embodiment of this application, the target point cloud is the first point cloud within the target coordinate range.

Step 304: The electronic device determines a target plane based on the target point cloud.

In this embodiment of this application, the first coordinate system is a coordinate system corresponding to the physical space.

Optionally, in this embodiment of this application, the coordinate system corresponding to the physical space may specifically be a world coordinate system.

Optionally, in this embodiment of this application, the electronic device may obtain at least one plane through the plane detection method for the target point cloud.

Further optionally, in this embodiment of this application, the method of plane detection may specifically be a region growing method or a plane fitting method.

Further optionally, in this embodiment of this application, the electronic device may determine the target plane from planes meeting a first preset condition in the at least one plane.

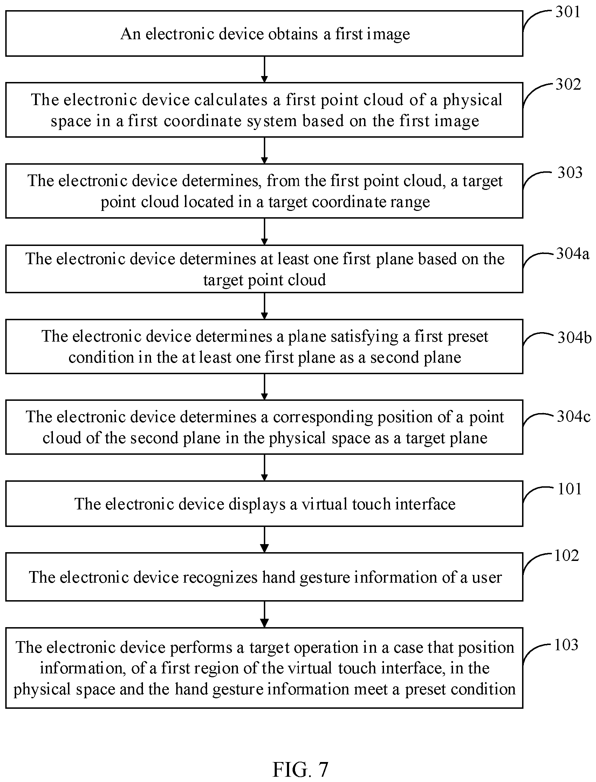

Optionally, in this embodiment of this application, with reference to FIG. 4, as shown in FIG. 7, the above step 304 may be specifically implemented through the following steps 304a to 304c.

Step 304a: The electronic device determines at least one first plane based on the target point cloud.

Optionally, in this embodiment of this application, each first plane contains point cloud information forming the plane.

Further optionally, in this embodiment of this application, the at least one first plane may be a plane with a different or same normal vector.

In an example, when the target point cloud is a dense point cloud, the electronic device may perform plane detection on the target point cloud in a region growing manner, that is, randomly select a plurality of point cloud points in the target point cloud region as plane seeds, and circularly determine whether points in the seed neighborhood belong to the plane; and if so, the points are added to the plane and searching is performed in the expanded neighborhood. The region growing algorithm is an open algorithm, and is not further described in detail here.

In another example, when the target point cloud is a sparse point cloud, the electronic device may perform plane detection on the target point cloud in a plane fitting manner, that is, the electronic device performs cluster processing on the target point cloud, uses a typical horizontal plane fitting algorithm for plane fitting, and fuses the plane with the existing reference plane. The plane fitting algorithm is an open algorithm, and is not further described in detail here.

The following uses plane detection being performed based on dense depth information by the electronic device as an example to describe how the electronic device obtains the target plane and generates the virtual touch panel.

Step 304b: The electronic device determines a plane meeting the first preset condition in the at least one first plane as a second plane.

In this embodiment of this application, the first preset condition includes at least one of the following: a plane whose included angle between its normal vector and a normal vector of the horizontal plane in the physical space is less than a preset value in the at least one first plane; a plane perpendicular to a target direction in the at least one first plane; and a plane whose plane size is in a preset range in the at least one first plane.

Optionally, in this embodiment of this application, the preset angle value can be determined according to specific use of the user.

Further optionally, in this embodiment of this application, the electronic device can remove, based on the preset angle value, the first plane whose included angle between its normal vector and the normal vector of the horizontal plane is greater than the preset angle value.

Optionally, in this embodiment of this application, based on the point cloud information of each first plane, the normal vector, circumscribed rectangle, and plane size of the plane can be determined.

Further optionally, in this embodiment of this application, the electronic device may determine the first plane with at least one side of the circumscribed rectangle perpendicular to the target direction of the electronic device based on the circumscribed rectangle of the target point cloud.

Further optionally, in this embodiment of this application, the target direction is a line-of-sight direction when the user uses the electronic device.

Further optionally, in this embodiment of this application, the electronic device may determine, based on the plane size of the first plane, a first plane with the plane size being within a preset range.

Further optionally, in this embodiment of this application, the preset range may be determined based on the target coordinate range.

Step 304c: The electronic device determines a corresponding position of a point cloud of the second plane in the physical space as the target plane.

In this embodiment of this application, the electronic device may determine at least one first plane meeting the first preset condition as the second plane.

Optionally, in this embodiment of this application, the electronic device may determine a location region corresponding to the point cloud forming the second plane in the physical space as the target plane.

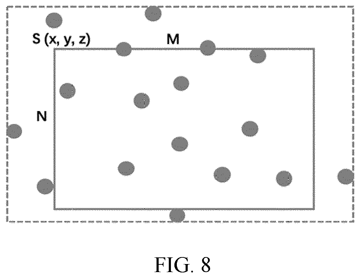

For example, as shown in FIG. 8, the dotted rectangular frame is a second plane. A point cloud forming the second plane corresponds to a rectangular plane of the physical space, and a region with a preset length M and width N can be generated as a target plane of the virtual touch panel.

It should be noted that if there are a plurality of target planes in the system, virtual touch panel regions are generated for these target planes, which are then displayed on the screen of electronic device and selected by users. The electronic device may perform tracking and positioning on the generated virtual touch panel, and the tracking and positioning on the virtual touch panel require no special processing, only a spatial position of the electronic device needs to be calculated in real time, which is solved by a SLAM algorithm. This is not described in this embodiment of this application.

The following uses plane detection being performed based on sparse depth information by the electronic device as an example to describe how the electronic device obtains the target plane and generates the virtual touch panel.

Optionally, in this embodiment of this application, the target coordinate range includes at least one first coordinate range.

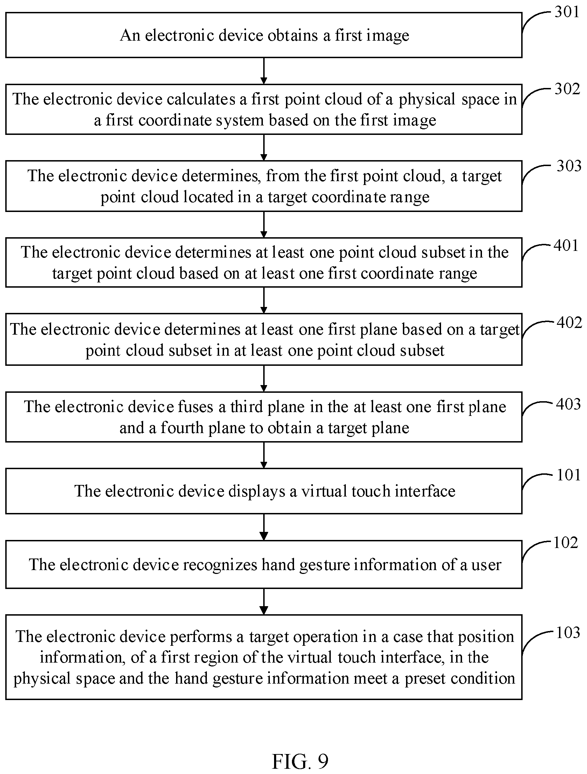

With reference to FIG. 4, as shown in FIG. 9, this embodiment of this application can also be implemented through the following steps 401 to 403.

Step 401: The electronic device determines at least one point cloud subset in the target point cloud based on the at least one first coordinate range.

In this embodiment of this application, each point cloud subset corresponds to each first coordinate range, and the point cloud subset includes at least one point cloud;

In this embodiment of this application, the at least one point cloud subset is in one-to-one correspondence to the at least one first coordinate range, and each point cloud subset includes at least one point cloud in the target point cloud.

Further optionally, in this embodiment of this application, the height H2 of the rectangular coordinate set corresponding to the target coordinate range is equally divided into at least one range, and a value of the target point cloud in the Y axis in the first coordinate system falls within the at least one range to obtain at least one point cloud subset.

Step 402: The electronic device determines at least one first plane based on a target point cloud subset in at least one point cloud subset.

In this embodiment of this application, the target point cloud subset is a point cloud subset whose quantity of point clouds is greater than or equal to a preset quantity in the at least one point cloud subset.

Optionally, in this embodiment of this application, for the target point cloud in the at least one point cloud subset, a typical horizontal plane fitting method can be used to calculate a horizontal plane formed by the at least one point cloud subset to obtain at least one first plane of the current frame and several discrete point clouds that do not form the first plane.

In this embodiment of this application, the at least one first plane is in one-to-one correspondence to the at least one point cloud subset.

Step 403: The electronic device fuses a third plane in the at least one first plane and a fourth plane to obtain the target plane.

In this embodiment of this application, the fourth plane is a plane stored in the electronic device, and spatial positions of the third plane and the fourth plane in the physical space meet a second preset condition.

Optionally, in this embodiment of this application, the third plane is a plane obtained through cluster processing on the target point cloud in the point cloud subset and through plane detection by using a horizontal plane fitting method.

Optionally, in this embodiment of this application, the fourth plane is a plane that is determined based on a previous image of at least one second image and is stored.

Optionally, in this embodiment of this application, the second preset condition includes at least one of the following: overlapping with a fourth plane in the first direction, and a spatial distance from the fourth plane in the second direction being less than or equal to the second preset spatial distance; where the first direction is perpendicular to the second direction.

Optionally, in this embodiment of this application, the electronic device performs plane fusing on the third plane and the fourth plane that is stored in the system of the electronic device.

Optionally, in this embodiment of this application, the electronic device may also process the discrete point cloud in the current frame. For each discrete point cloud in the at least one point cloud subset, if a distance between the discrete point cloud and the fourth plane of the system in the horizontal direction is less than a set threshold, and a height difference in the vertical direction is within a specific threshold, the discrete point cloud and the fourth plane are fused.

It can be learned that because the electronic device can obtain at least one second image without depending on a specific depth module, and the target plane can be obtained based on the at least one second image so as to generate a virtual touch interface. This prevents the user from holding up a hand relative to the XR device for a long time to perform a distance hand gesture with a hand gesture type corresponding to a specific operation. In this way, the time consumed in the process of triggering the electronic device to perform the target operation can be reduced, and accuracy of the hand gesture operation can be prevented from being affected due to hand muscle fatigue of the user, thereby improving convenience and accuracy of using the XR device.

Certainly, there may be a case where the user needs to use the electronic device when moving. In this case, the electronic device may use one hand as a virtual touch panel, and then operate with the other hand. The following describes the case by using an example.

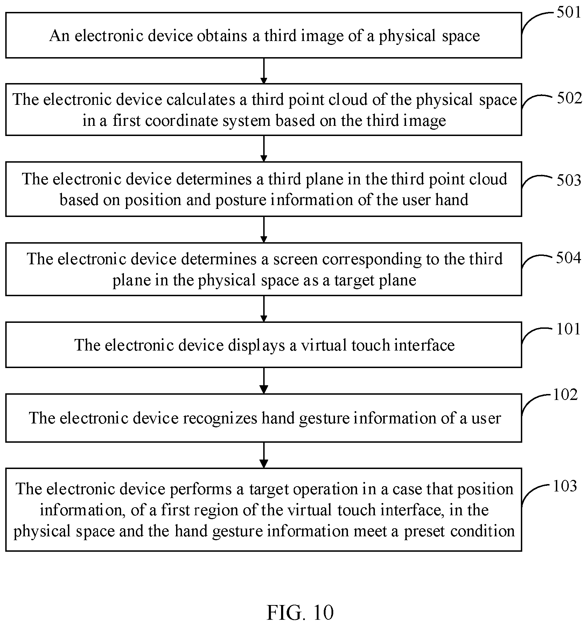

Optionally, in this embodiment of this application, with reference to FIG. 1, as shown in FIG. 10, before the above step 101, the virtual operating method provided in this embodiment of this application may be further implemented by the following steps 501 to 504.

Step 501: The electronic device obtains a third image of the physical space.

In this embodiment of this application, the third image includes an image of a user hand.

Optionally, in this embodiment of this application, the third image is an image of the physical space in which the electronic device is located, and each frame of third image in the third image includes the user hand.

Further optionally, in this embodiment of this application, the third image includes depth image data information and image data information of the physical space of the electronic device, and image data information or depth image data information of joint points of the user hand.

Step 502: The electronic device calculates a third point cloud of the physical space in the first coordinate system based on the third image.

In this embodiment of this application, the third point cloud includes position and posture information of the user hand.

It can be understood that at least one frame of third image obtained by the electronic device is used to convert image information of the user hand into the third point cloud in the first coordinate system.

Optionally, in this embodiment of this application, the position and posture information of the hand is position and state information of the joint points of the user hand and the palm.

Optionally, in this embodiment of this application, the third point cloud is cloud point coordinates of the joint points of the user hand and the palm in the first coordinate system.

Optionally, in this embodiment of this application, for converting the image information of at least one frame of third image into point cloud information in the first coordinate system by the electronic device, refer to the coordinate system conversion method described above in this embodiment.

For example, the electronic device performs detection on the joint points of the hand in data of each frame of the third image to obtain positions and postures of five fingers and a palm of one hand, as shown in FIG. 3, from which 11 joint points are selected, namely, the five fingers (16, 17, 18, 19, 20) and the palm (0, 1, 4, 7, 10, 14). The electronic device converts coordinates of the selected 11 joint points in the camera coordinate system into coordinates in the world coordinate system. For the specific conversion process, refer to related descriptions in the above embodiment, which is not repeated here.

Step 503: The electronic device determines a third plane in the third point cloud based on the position and posture information of the user hand.

Optionally, in this embodiment of this application, based on the third point cloud, the electronic device may obtain a circumscribed rectangle of the third point cloud by using a plane fitting method.

Further optionally, in this embodiment of this application, the third plane corresponding to the circumscribed rectangle includes a normal direction of the plane and vertex coordinate data forming the plane.

Optionally, in this embodiment of this application, the electronic device may obtain an area of the circumscribed rectangle based on vertex data of the circumscribed rectangle.

Further optionally, in this embodiment of this application, a circumscribed rectangle with an area being greater than or equal to a preset area may be determined as a target circumscribed rectangle.

Further optionally, in this embodiment of this application, the electronic device may determine the target circumscribed rectangle as the third plane.

Step 504: The electronic device determines a screen corresponding to the third plane in the physical space as the target plane.

In this embodiment of this application, the first coordinate system is a coordinate system corresponding to the physical space.

Optionally, in this embodiment of this application, the electronic device may determine a location region corresponding to the point cloud forming the third plane in the physical space as the target plane.

It can be learned from the foregoing that the electronic device can recognize the user hand, determine one hand as a virtual touch interface, and recognize hand gesture information of the other hand relative to the electronic device without volleying the distance hand gesture relative to the electronic device. In this way, the time consumed in the process of triggering the electronic device to perform the target operation can be reduced, and accuracy of the hand gesture operation can be prevented from being affected due to hand muscle fatigue of the user, thereby improving convenience and accuracy of using the XR device.

The execution subject of the method provided in the embodiments of this application may be an apparatus. In the embodiments of this application, the apparatus provided in the embodiments of this application is described by using the method being executed by the apparatus as an example.

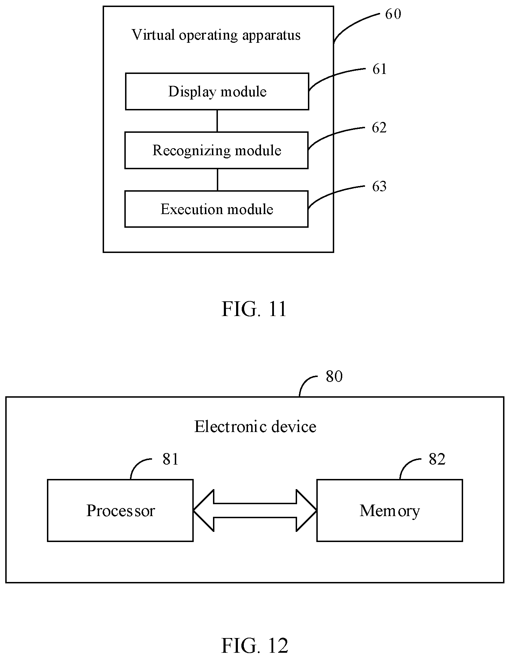

FIG. 11 is a possible schematic structural diagram of a virtual operating apparatus involved in the above embodiment. As shown in FIG. 11, the virtual operating apparatus 60 provided in this embodiment of this application may include a display module 61, a recognizing module 62, and an execution module 63. The display module 61 is configured to display a virtual touch interface, where the virtual touch interface is associated with a position of a target plane in a physical space in which an electronic device is located. The recognizing module 62 is configured to recognize hand gesture information of a user. The execution module 63 is configured to perform a target operation in a case that the hand gesture information recognized by the recognizing module and position information of a first region of the virtual touch interface disposed by the display module in the physical space meet a preset condition.

In a possible implementation, the virtual operating apparatus 60 further includes an obtaining module, a calculation module, and a determining module. The obtaining module is configured to obtain a first image, where the first image is an image of the physical space in which the electronic device is located. The calculation module is configured to calculate a first point cloud of the physical space in a first coordinate system based on the first image obtained by the obtaining module. The determining module is configured to determine, from the first point cloud calculated by the calculation module, a target point cloud located in a target coordinate range, where the target coordinate range is determined based on coordinate information of the electronic device in the first coordinate system; and determine a target plane based on the target point cloud. The first coordinate system is a coordinate system corresponding to the physical space.

In a possible implementation, the first image is a depth image, and the depth image includes N pieces of first depth information corresponding to N first pixels and N pieces of third coordinate information corresponding to the N first pixels. The calculation module includes a conversion submodule. The calculation module is configured to calculate a second point cloud of the physical space in a second coordinate system based on the N pieces of first depth information and the N pieces of third coordinate information. The conversion submodule is configured to convert the second point cloud obtained by the calculation module into the first point cloud. The second coordinate system is a coordinate system corresponding to an image sensor of the virtual operating apparatus.

In a possible implementation, the determining module is specifically configured to determine at least one first plane based on the target point cloud, determine a plane meeting a first preset condition in the at least one first plane as a second plane, and determine a corresponding position of a point cloud of the second plane in the physical space as the target plane. The first preset condition includes at least one of the following: a plane whose included angle between its normal vector and a normal vector of the horizontal plane in the physical space is less than a preset value in the at least one first plane; a plane perpendicular to a target direction in the at least one first plane; and a plane whose plane size is in a preset range in the at least one first plane.

In a possible implementation, the target coordinate range includes at least one first coordinate range; and the determining module includes a fusion submodule. The determining module is specifically configured to determine at least one point cloud subset in the target point cloud based on the at least one first coordinate range, where each point cloud subset corresponds to each first coordinate range, and the point cloud subset includes at least one point cloud; and determine the at least one first plane based on a target point cloud subset in the at least one point cloud subset, where the target point cloud subset is a point cloud subset whose quantity of point clouds is greater than or equal to a preset quantity in the at least one point cloud subset. The fusion submodule is configured to fuse a third plane in the at least one first plane and a fourth plane to obtain the target plane, where the fourth plane is a plane stored in the electronic device, and spatial positions of the third plane and the fourth plane in the physical space meet a second preset condition.

In a possible implementation, the operation execution apparatus further includes an obtaining module, a calculation module, and a determining module. the obtaining module is configured to obtain a third image of a physical space, where the third image includes an image of a user hand; the calculation module is configured to: based on the third image obtained by the obtaining module, calculate a third point cloud of the physical space in a first coordinate system, where the third point cloud includes position and posture information of the user hand; and the determining module is configured to: based on the position and posture information of the user hand, determine a third plane in the third point cloud calculated by the calculation module; and determine a screen corresponding to the third plane determined by the determining module in the physical space as a target plane; where the first coordinate system is a coordinate system corresponding to the physical space.

In a possible implementation, the recognizing module 62 includes an obtaining submodule. The obtaining submodule is configured to obtain a fourth image of the physical space, where the fourth image includes an image of the user hand. The recognizing module is configured to perform user hand gesture recognition on the fourth image to obtain at least one piece of hand joint point information.

In a possible implementation, the at least one piece of hand joint point information includes at least one first coordinate of at least one hand joint in a second coordinate system. The execution module 63 includes a determining submodule. The determining submodule is configured to determine a first region of the virtual touch interface in a case that a spatial distance in the physical space between the at least one first coordinate and the virtual touch interface meets a preset condition. The execution module is specifically configured to perform the target operation based on operation information corresponding to the first region.

According to the virtual operating apparatus provided in this embodiment of this application, because the virtual operating apparatus can display the virtual touch interface associated with the position of the target plane in the physical space in which the virtual operating apparatus is located, and recognize the hand gesture information of the user, the user can directly perform a distance hand gesture whose hand gesture information as well as the position information, of the first region of the virtual touch interface, in the physical space meet the preset condition, so that the virtual operating apparatus can perform the target operation, with no need to trigger the XR device to connect a peripheral apparatus first, and then perform a mobile input on the peripheral apparatus. This is less time-consuming in the process of triggering the virtual operating apparatus to perform the target operation, thereby improving use convenience of the virtual operating apparatus.

The virtual operating apparatus in this embodiment of this application may be an electronic device or a component in the electronic device, such as an integrated circuit or a chip. The electronic device may be a terminal or other devices than the terminal. For example, the electronic device can be a mobile phone, a tablet computer, a notebook computer, a palmtop computer, a vehicle-mounted electronic device, a mobile internet device (mobile internet device, MID), an augmented reality (augmented reality, AR)/ virtual reality (virtual reality, VR) device, a robot, a wearable device, an ultra-mobile personal computer (ultra-mobile personal computer, UMPC), a netbook or personal digital assistant (personal digital assistant, PDA), or the like; or may be a server, a network attached storage (network attached storage, NAS), a personal computer (personal computer, PC), a television (television, TV), a teller machine, a self-service machine, or the like. This is not specifically limited in the embodiments of this application.

The virtual operating apparatus in this embodiment of this application may be an apparatus with an operating system. The operating system may be an Android (Android) operating system, may be an iOS operating system, or may be another possible operating system. This is not specifically limited in this embodiment of this application.

The virtual operating apparatus provided in this embodiment of this application is capable of implementing various processes that are implemented in the method embodiments of FIG. 1 to FIG. 10. To avoid repetition, details are not described herein.

Optionally, in this embodiment of this application, as shown in FIG. 12, an embodiment of this application further provides an electronic device 80, including a processor 81 and a memory 82, and the memory 82 stores a program or instructions executable on the processor 81. When the program or instructions are executed by the processor 81, the steps of the foregoing embodiments of the shooting method are implemented, with the same technical effects. To avoid repetition, details are not further described herein.

It should be noted that the electronic device in this embodiment of this application includes the foregoing mobile electronic devices and non-mobile electronic devices.

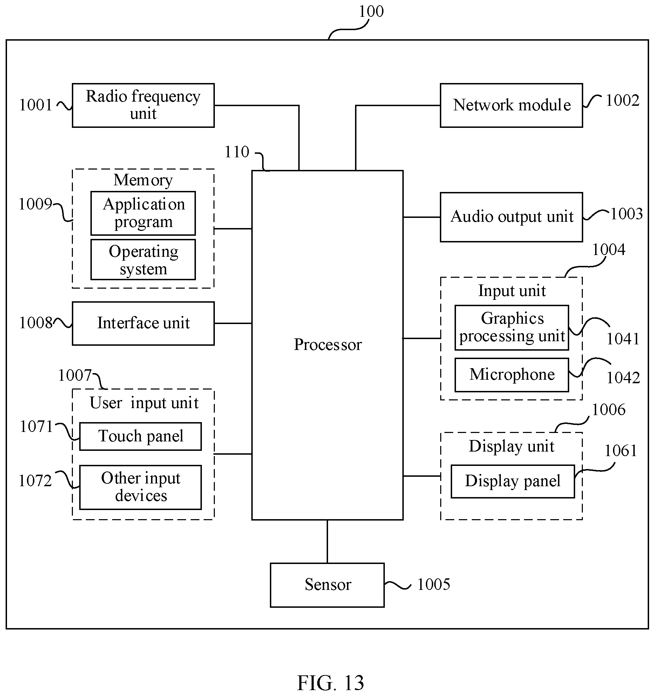

FIG. 13 is a schematic diagram of a hardware structure of an electronic device for implementing the embodiments of this application.

The electronic device 100 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 110.

Persons skilled in the art can understand that the electronic device 100 may further include a power supply (for example, a battery) that supplies power to various components. The power supply may be logically connected to the processor 110 through a power management system, so that functions such as charge and discharge management and power consumption management are implemented by using the power management system. The structure of the electronic device shown in FIG. 13 does not constitute a limitation on the electronic device. The electronic device may include more or fewer components than those shown in the figure, or some components may be combined, or there may be a different component layout. Details are not described herein again.

The processor 110 is specifically configured to display a virtual touch interface on a target plane of an environment in which the electronic device is currently located, recognize the distance hand gesture of the user relative to the electronic device, and in a case that a first distance hand gesture of the user relative to the electronic device on the virtual touch interface is recognized, perform a target operation in response to the first distance hand gesture, where the target operation is an operation corresponding to a hand gesture parameter of the first distance hand gesture.

According to the electronic device provided in this embodiment of this application, because the electronic device can display the virtual touch interface associated with the position of the target plane in the physical space in which the electronic device is located, and recognize the hand gesture information of the user, the user can directly perform a distance hand gesture whose hand gesture information as well as the position information, of the first region of the virtual touch interface, in the physical space meet the preset condition, so that the electronic device can perform the target operation, with no need to trigger the XR device to connect a peripheral apparatus first, and then perform a mobile input on the peripheral apparatus. In this way, the time consumed in the process of triggering the electronic device to perform the target operation can be reduced, thereby improving use convenience of the electronic device.

Optionally, in this embodiment of this application, the processor 110 is specifically configured to: obtain a first image, where the first image is an image of the physical space in which the electronic device is located; calculate a first point cloud of the physical space in a first coordinate system based on the first image; determine, from the first point cloud calculated by the calculation module, a target point cloud located in a target coordinate range, where the target coordinate range is determined based on coordinate information of the electronic device in the first coordinate system; and determine a target plane based on the target point cloud, where the first coordinate system is a coordinate system corresponding to the physical space.

Optionally, in this embodiment of this application, the processor 110 is specifically configured to calculate a second point cloud of the physical space in a second coordinate system based on the N pieces of first depth information and the N pieces of third coordinate information, and convert the second point cloud into the first point cloud; where the second coordinate system is a coordinate system corresponding to an image sensor of the electronic device.

Optionally, in this embodiment of this application, the processor 110 is specifically configured to determine at least one first plane based on the target point cloud, determine a plane meeting a first preset condition in the at least one first plane as a second plane, and determine a corresponding position of a point cloud of the second plane in the physical space as the target plane; where the first preset condition includes at least one of the following: a plane whose included angle between its normal vector and a normal vector of the horizontal plane in the physical space is less than a preset value in the at least one first plane; a plane perpendicular to a target direction in the at least one first plane; and a plane whose plane size is in a preset range in the at least one first plane.

Optionally, in this embodiment of this application, the processor 110 is specifically configured to: determine at least one point cloud subset in the target point cloud based on the at least one first coordinate range, where each point cloud subset corresponds to each first coordinate range, and the point cloud subset includes at least one point cloud; determine the at least one first plane based on a target point cloud subset in the at least one point cloud subset, where the target point cloud subset is a point cloud subset whose quantity of point clouds is greater than or equal to a preset quantity in the at least one point cloud subset; and fuse a third plane in the at least one first plane and a fourth plane to obtain the target plane, where the fourth plane is a plane stored in the electronic device, and spatial positions of the third plane and the fourth plane in the physical space meet a preset condition.

Optionally, in this embodiment of this application, the processor 110 is specifically configured to: obtain a third image of a physical space, where the third image includes an image of a user hand; based on the third image; calculate a third point cloud of the physical space in a first coordinate system, where the third point cloud includes position and posture information of the user hand; determine a third plane in the third point cloud based on the position and posture information of the user hand; and determine a screen corresponding to the third plane in the physical space as a target plane; where the first coordinate system is a coordinate system corresponding to the physical space.

Optionally, in this embodiment of this application, the processor 110 is specifically configured to: obtain a fourth image of the physical space, where the fourth image includes an image of a user hand; and perform user hand gesture recognition on the fourth image to obtain at least one piece of hand joint point information.

Optionally, in this embodiment of this application, the processor 110 is specifically configured to: determine a first region of the virtual touch interface in a case that a spatial distance in the physical space between the at least one first coordinate and the virtual touch interface meets a preset condition; and perform the target operation based on operation information corresponding to the first region.

It should be understood that in this embodiment of this application, the input unit 1004 may include a graphics processing unit (graphics processing unit, GPU) 1041 and a microphone 1042. The graphics processing unit 1041 processes image data of a static picture or a video that is obtained by an image capture apparatus (for example, a camera) in a video capture mode or an image capture mode. The display unit 1006 may include the display panel 1061. The display panel 1061 may be configured in a form of a liquid crystal display, an organic light-emitting diode, or the like. The user input unit 1007 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to at least one of a physical keyboard, a functional button (such as a volume control button or a power on/off button), a trackball, a mouse, and a joystick. Details are not described herein.

The memory 1009 may be configured to store software programs and various data. The memory 1009 may mainly include a first storage area for storing programs or instructions and a second storage area for storing data, where the first storage area may store an operating system, an application program or instructions required by at least one function (for example, an audio playing function and an image playing function), and the like. In addition, the memory 1009 may be a volatile memory or a non-volatile memory, or the memory 1009 may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), a static random access memory (static RAM, SRAM), a dynamic random access memory (dynamic RAM, DRAM), synchronous dynamic random access memory (synchronous DRAM, SDRAM), a double data rate synchronous dynamic random access memory (double data rate SDRAM, DDRSDRAM), an enhanced synchronous dynamic random access memory (enhanced SDRAM, ESDRAM), a synchronous link dynamic random access memory (synch link DRAM, SLDRAM), and a direct memory bus random access memory (direct rambus RAM, DRRAM). The memory 1009 described in this embodiment this application includes but is not limited to these and any other suitable types of memories.

The processor 110 may include one or more processing units. Optionally, the processor 110 integrates an application processor and a modem processor. The application processor mainly processes operations related to an operating system, a user interface, an application program, and the like. The modem processor mainly processes wireless communication signals, for example, a baseband processor. It should be understood that alternatively, the modem processor may not be integrated into the processor 110.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scopes of the method and apparatus in the implementations of this application are not limited to performing functions in the sequence shown or discussed, and may further include performing functions at substantially the same time or in a reverse sequence according to the involved functions. For example, the described method may be performed in a sequence different from the described sequence, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Specifically, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A virtual operating method, wherein the method comprises:

   displaying a virtual touch interface, wherein the virtual touch interface is associated with a position of a target plane in a physical space in which an electronic device is located;
   recognizing hand gesture information of a user; and
   performing a target operation in a case that position information, of a first region of the virtual touch interface, in the physical space and the hand gesture information meet a preset condition.

2. The method according to claim 1, wherein before the displaying the virtual touch interface, the method further comprises:

   obtaining a first image, wherein the first image is an image of the physical space in which the electronic device is located;
   calculating a first point cloud of the physical space in a first coordinate system based on the first image;
   determining, from the first point cloud, a target point cloud located in a target coordinate range, wherein the target coordinate range is determined based on coordinate information of the electronic device in the first coordinate system; and
   determining a target plane based on the target point cloud; wherein
   the first coordinate system is a coordinate system corresponding to the physical space.

3. The method according to claim 2, wherein the first image is a depth image, and the depth image comprises N pieces of first depth information corresponding to N first pixels and N pieces of third coordinate information corresponding to the N first pixels; and the calculating the first point cloud of the physical space in the first coordinate system based on the first image comprises:

   calculating a second point cloud of the physical space in a second coordinate system based on the N pieces of first depth information and the N pieces of third coordinate information; and
   converting the second point cloud into the first point cloud; wherein
   the second coordinate system is a coordinate system corresponding to an image sensor of the electronic device.

4. The method according to claim 2 or 3, wherein the determining the target plane based on the target point cloud comprises:

   determining at least one first plane based on the target point cloud;
   determining a plane meeting a first preset condition in the at least one first plane as a second plane; and

determining a corresponding position of a point cloud of the second plane in the physical space as the target plane; wherein

the first preset condition comprises at least one of the following:

a plane whose included angle between its normal vector and a normal vector of a horizontal plane in the physical space is less than a preset value in the at least one first plane;

a plane perpendicular to a target direction in the at least one first plane; and

a plane whose plane size is in a preset range in the at least one first plane.

5.  The method according to claim 2, wherein the target coordinate range comprises at least one first coordinate range; and

the determining the at least one first plane based on the target point cloud and determining the target plane based on the at least one first plane comprises:

determining at least one point cloud subset in the target point cloud based on the at least one first coordinate range, wherein each point cloud subset corresponds to each first coordinate range, and a point cloud subset comprises at least one point cloud;

determining the at least one first plane based on a target point cloud subset in the at least one point cloud subset, wherein the target point cloud subset is a point cloud subset whose quantity of point clouds is greater than or equal to a preset quantity in the at least one point cloud subset; and

fusing a third plane in the at least one first plane and a fourth plane to obtain the target plane, wherein the fourth plane is a plane stored in the electronic device, and spatial positions of the third plane and the fourth plane in the physical space meet a second preset condition.

6.  The method according to claim 1, wherein before the displaying the virtual touch interface, the method further comprises:

obtaining a third image of the physical space, wherein the third image comprises an image of a user hand;

based on the third image, calculating a third point cloud of the physical space in a first coordinate system, wherein the third point cloud comprises position and posture information of the user hand;

determining a third plane in the third point cloud based on the position and posture information of the user hand; and

determining a screen corresponding to the third plane in the physical space as the target plane; wherein

the first coordinate system is a coordinate system corresponding to the physical space.

7.  The method according to claim 1, wherein the recognizing the hand gesture information of the user comprises:

obtaining a fourth image of the physical space, wherein the fourth image comprises an image of a user hand; and

performing user hand gesture recognition on the fourth image to obtain at least one piece of hand joint point information.

8.  The method according to claim 7, wherein the at least one piece of hand joint point information comprises at least one first coordinate of at least one hand joint in a second coordinate system; and

the performing the target operation in the case that the position information, of the first region of the virtual touch interface, in the physical space and the hand gesture information meet the preset condition comprises:

determining the first region of the virtual touch interface in a case that a spatial distance in the physical space between the at least one first coordinate and the virtual touch interface meets the preset condition; and

performing the target operation based on operation information corresponding to the first region.

9.  A virtual operating apparatus, comprising a display module, a recognizing module, and an execution module; wherein

the display module is configured to display a virtual touch interface, wherein the virtual touch interface is associated with a position of a target plane in a physical space in which an electronic device is located; and the recognizing module is configured to recognize hand gesture information of a user; and

the execution module is configured to perform a target operation in a case that the hand gesture information recognized by the recognizing module and position information of a first region of the virtual touch interface disposed by the display module in the physical space meet a preset condition.

10. The virtual operating apparatus according to claim 9, wherein the virtual operating apparatus further comprises an obtaining module, a calculation module, and a determining module; wherein

the obtaining module is configured to obtain a first image, wherein the first image is an image of the physical space in which the electronic device is located;

the calculation module is configured to calculate a first point cloud of the physical space in a first coordinate system based on the first image obtained by the obtaining module; and

the determining module is configured to: determine, from the first point cloud calculated by the calculation module, a target point cloud located in a target coordinate range, wherein the target coordinate range is determined based on coordinate information of the electronic device in the first coordinate system; and determine a target plane based on the target point cloud; wherein the first coordinate system is a coordinate system corresponding to the physical space.

11. The operation execution apparatus according to claim 9, wherein the operation execution apparatus further comprises an obtaining module, a calculation module, and a determining module; wherein

the obtaining module is configured to obtain a third image of a physical space, wherein the third image comprises an image of a user hand;

the calculation module is configured to: based on the third image obtained by the obtaining module, calculate a third point cloud of the physical space in a first coordinate system, wherein the third point cloud comprises position and posture information of the user hand; and

the determining module is configured to: based on the position and posture information of the user hand, determine a third plane in the third point cloud calculated by the calculation module; and determine a screen corresponding to the third plane determined by the determining module in the physical space as a target plane; wherein

the first coordinate system is a coordinate system corresponding to the physical space.

12. The operation execution apparatus according to claim 10 or 11, wherein the determining module is specifically configured to determine at least one first plane based on the target point cloud, determine a plane meeting a first preset condition in the at least one first plane as a second plane, and determine a corresponding position of a point cloud of the second plane in the physical space as the target plane; wherein

the first preset condition comprises at least one of the following:

a plane whose included angle between its normal vector and a normal vector of a horizontal plane in the physical space is less than a preset value in the at least one first plane;

a plane perpendicular to a target direction in the at least one first plane; and

a plane whose plane size is in a preset range in the at least one first plane.

13. The operation execution apparatus according to claim 10, wherein the target coordinate range comprises at least one first coordinate range; and the determining module comprises a fusion submodule;

the determining module is specifically configured to: determine at least one point cloud subset in the target point cloud based on the at least one first coordinate range, wherein each point cloud subset corresponds to each first coordinate range, and a point cloud subset comprises at least one point cloud; and determine the at least one first plane based on a target point cloud subset in the at least one point cloud subset, wherein the target point cloud subset is a point cloud subset whose quantity of point clouds is greater than or equal to a preset quantity in the at least one point cloud subset; and

the fusion submodule is configured to fuse a third plane in the at least one first plane and a fourth plane to obtain the target plane, wherein the fourth plane is a plane stored in the electronic device, and spatial positions of the third plane and the fourth plane in the physical space meet a second preset condition.

14. The operation execution apparatus according to claim 9, wherein the operation execution apparatus further comprises an obtaining module, a calculation module, and a determining module; wherein

the obtaining module is configured to obtain a third image of the physical space before the virtual touch interface is displayed, wherein the third image comprises an image of a user hand;

the calculation module is configured to: based on the third image, calculate a third point cloud of the physical space in a first coordinate system, wherein the third point cloud comprises position and posture information of the user hand; and

the determining module is configured to: determine a third plane in the third point cloud based on the position and posture information of the user hand; and determine a screen corresponding to the third plane in the physical space as the target plane; wherein

the first coordinate system is a coordinate system corresponding to the physical space.

**15.** The virtual operating apparatus according to claim 9, wherein the recognizing module comprises: an obtaining submodule; wherein

the obtaining submodule is configured to obtain a fourth image of the physical space, wherein the fourth image comprises an image of a user hand; and
the recognizing module is configured to perform user hand gesture recognition on the fourth image to obtain at least one piece of hand joint point information.

**16.** The virtual operating apparatus according to claim 15, wherein the at least one piece of hand joint point information comprises at least one first coordinate of at least one hand joint in a second coordinate system; and the execution module comprises a determining submodule; wherein

the determining submodule is configured to determine the first region of the virtual touch interface in a case that a spatial distance in the physical space between the at least one first coordinate and the virtual touch interface meets the preset condition; and
the execution module is specifically configured to perform the target operation based on operation information corresponding to the first region.

**17.** An electronic device, comprising a processor and a memory, wherein a program or instructions are stored in the memory and executable on the processor, and when the program or instructions are executed by the processor, steps of the virtual operation execution method according to any one of claims 1 to 8 are implemented.

**18.** A readable storage medium, wherein a program or instructions are stored in the readable storage medium, and when the program or instructions are executed by a processor, steps of the virtual operation execution method according to any one of claims 1 to 8 are implemented.

**19.** A computer program product, wherein when the program product is executed by at least one processor, steps of the virtual operating method according to any one of claims 1 to 8 are implemented.

**20.** User equipment UE, wherein the UE is configured to perform the virtual operating method according to any one of claims 1 to 8.

An electronic device displays a virtual touch interface ⌐ 101

The electronic device recognizes hand gesture information of a user ⌐ 102

The electronic device performs a target operation in a case that position information, of a first region of the virtual touch interface, in the physical space and the hand gesture information meet a preset condition ⌐ 103

FIG. 1

An electronic device displays a virtual touch interface ⌐ 101

The electronic device recognizes hand gesture information of a user ⌐ 102

The electronic device obtains a fourth image of a physical space ⌐ 201

The electronic device performs user hand gesture recognition on the fourth image to obtain at least one piece of hand joint point information ⌐ 202

The electronic device performs a target operation in a case that position information, of a first region of the virtual touch interface, in the physical space and the hand gesture information meet a preset condition ⌐ 103

FIG. 2

FIG. 3

An electronic device obtains a first image ⌐301

The electronic device calculates a first point cloud of a physical space in a first coordinate system based on the first image ⌐302

The electronic device determines, from the first point cloud, a target point cloud located in a target coordinate range ⌐303

The electronic device determines a target plane based on the target point cloud ⌐304

The electronic device displays a virtual touch interface ⌐101

The electronic device recognizes hand gesture information of a user ⌐102

The electronic device performs a target operation in a case that position information, of a first region of the virtual touch interface, in the physical space and the hand gesture information meet a preset condition ⌐103

FIG. 4

An electronic device obtains a first image ⎰⎱ 301

The electronic device calculates a second point cloud of a physical space in a second coordinate system based on N pieces of first depth information and N pieces of third coordinate information ⎰⎱ 302a

The electronic device converts the second point cloud into a first point cloud ⎰⎱ 302b

The electronic device determines, from the first point cloud, a target point cloud located in a target coordinate range ⎰⎱ 303

The electronic device determines a target plane based on the target point cloud ⎰⎱ 304

The electronic device displays a virtual touch interface ⎰⎱ 101

The electronic device recognizes hand gesture information of a user ⎰⎱ 102

The electronic device performs a target operation in a case that position information, of a first region of the virtual touch interface, in the physical space and the hand gesture information meet a preset condition ⎰⎱ 103

FIG. 5

FIG. 6

An electronic device obtains a first image 301

The electronic device calculates a first point cloud of a physical space in a first coordinate system based on the first image 302

The electronic device determines, from the first point cloud, a target point cloud located in a target coordinate range 303

The electronic device determines at least one first plane based on the target point cloud 304a

The electronic device determines a plane satisfying a first preset condition in the at least one first plane as a second plane 304b

The electronic device determines a corresponding position of a point cloud of the second plane in the physical space as a target plane 304c

The electronic device displays a virtual touch interface 101

The electronic device recognizes hand gesture information of a user 102

The electronic device performs a target operation in a case that position information, of a first region of the virtual touch interface, in the physical space and the hand gesture information meet a preset condition 103

FIG. 7

FIG. 8

An electronic device obtains a first image ⌐ 301

The electronic device calculates a first point cloud of a physical space in a first coordinate system based on the first image ⌐ 302

The electronic device determines, from the first point cloud, a target point cloud located in a target coordinate range ⌐ 303

The electronic device determines at least one point cloud subset in the target point cloud based on at least one first coordinate range ⌐ 401

The electronic device determines at least one first plane based on a target point cloud subset in at least one point cloud subset ⌐ 402

The electronic device fuses a third plane in the at least one first plane and a fourth plane to obtain a target plane ⌐ 403

The electronic device displays a virtual touch interface ⌐ 101

The electronic device recognizes hand gesture information of a user ⌐ 102

The electronic device performs a target operation in a case that position information, of a first region of the virtual touch interface, in the physical space and the hand gesture information meet a preset condition ⌐ 103

FIG. 9

An electronic device obtains a third image of a physical space — 501

The electronic device calculates a third point cloud of the physical space in a first coordinate system based on the third image — 502

The electronic device determines a third plane in the third point cloud based on position and posture information of the user hand — 503

The electronic device determines a screen corresponding to the third plane in the physical space as a target plane — 504

The electronic device displays a virtual touch interface — 101

The electronic device recognizes hand gesture information of a user — 102

The electronic device performs a target operation in a case that position information, of a first region of the virtual touch interface, in the physical space and the hand gesture information meet a preset condition — 103

FIG. 10

Virtual operating apparatus — 60

Display module — 61

Recognizing module — 62

Execution module — 63

FIG. 11

— 80

Electronic device

— 81 Processor ⟺ Memory — 82

FIG. 12

100

FIG. 13

## INTERNATIONAL SEARCH REPORT

| | International application No. |
|---|---|
| | **PCT/CN2023/104823** |

**A. CLASSIFICATION OF SUBJECT MATTER**

G06F3/04883(2022.01)i;  G06F3/04847(2022.01)n

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, VEN, USTXT, CNKI, IEEE: 平面, 虚拟, 手势, 手指, 操作, 触控, 三维, 点云, 物理空间, 距离, plane, dummy, hand, gesture, touch, 3D, point cloud, physical space, distance

**C. DOCUMENTS CONSIDERED TO BE RELEVANT**

| Category* | Citation of document, with indication, where appropriate, of the relevant passages | Relevant to claim No. |
|---|---|---|
| PX | CN 115220636 A (VIVO MOBILE COMMUNICATION CO., LTD.) 21 October 2022 (2022-10-21) claims 1-14, and description, paragraphs 0032 and 0238 | 1-20 |
| X | CN 108519817 A (GUANGDONG OPPO MOBILE TELECOMMUNICATIONS CORP., LTD.) 11 September 2018 (2018-09-11) description, paragraphs 0047, 0063-0087, and 0108-0140, and figure 3 | 1-20 |
| X | CN 111399654 A (GUANGDONG OPPO MOBILE TELECOMMUNICATIONS CORP., LTD.) 10 July 2020 (2020-07-10) description, paragraphs 0040-0065 and 0149-0153 | 1-20 |
| A | US 2018114349 A1 (INSTITUTE FOR INFORMATION INDUSTRY) 26 April 2018 (2018-04-26) entire document | 1-20 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 October 2023** | **16 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104823**

| Patent document cited in search report | | | Publication date (day/month/year) | Patent family member(s) | | | Publication date (day/month/year) |
|---|---|---|---|---|---|---|---|
| CN | 115220636 | A | 21 October 2022 | None | | | |
| CN | 108519817 | A | 11 September 2018 | None | | | |
| CN | 111399654 | A | 10 July 2020 | None | | | |
| US | 2018114349 | A1 | 26 April 2018 | TW | 201816660 | A | 01 May 2018 |
| | | | | CN | 107978019 | A | 01 May 2018 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210834498